Europäisches Patentamt

European Patent Office

Office européen des brevets

(19)

(11) Veröffentlichungsnummer: **0 090 961**
**B1**

(12) **EUROPÄISCHE PATENTSCHRIFT**

(45) Veröffentlichungstag der Patentschrift:
02.07.86

(51) Int. Cl.⁴: **A 61 C 9/00**

(21) Anmeldenummer: **83102430.2**

(22) Anmeldetag: **11.03.83**

(54) Vorrichtung zum dosierten Ausbringen von Dentalmassen.

(30) Priorität: **01.04.82 DE 3212187**
**04.11.82 DE 3240785**

(43) Veröffentlichungstag der Anmeldung:
**12.10.83 Patentblatt 83/41**

(45) Bekanntmachung des Hinweises auf die Patenterteilung:
**02.07.86 Patentblatt 86/27**

(84) Benannte Vertragsstaaten:
**AT BE CH DE FR GB IT LI LU NL SE**

(56) Entgegenhaltungen:
**DE-B-2 741 185**
**FR-A-2 212 768**
**US-A-4 198 756**

(73) Patentinhaber: **Espe Fabrik Pharmazeutischer Präparate GmbH, D-8031 Seefeld / Obb (DE)**

(72) Erfinder: **Herold, Wolf- Dietrich, Seestrasse 16, D-8031 Hechendorf (DE)**
Erfinder: **Grimm- Lenz, Rainer, Münchner Strasse 9a, D-8031 Seefeld (DE)**
Erfinder: **Burger, Bernd, Hirtenweg 4a, D-8031 Hechendorf (DE)**
Erfinder: **Neumeister, Alexander, von Goebel- Platz 8, D-8000 München 19 (DE)**

(74) Vertreter: **Strehl, Peter, Dipl.- Ing., Strehl, Schübel- Hopf, Schulz Patentanwälte Widenmayerstrasse 17 Postfach 22 03 45, D-8000 München 22 (DE)**

EP 0 090 961 B1

LIBER, STOCKHOLM 1986

## Beschreibung

Die Erfindung bezieht sich auf eine einhändig betätigbare Vorrichtung zum dosierten Ausbringen von Dentalmassen der im Oberbegriff des Patentanspruchs 1 angegebenen Gattung.

In der Dentalpraxis, und zwar sowohl bei der Anfertigung von Zahnersatzteilen im Labor als auch bei der konservierenden Behandlung in situ, wird u.a. mit Kunststoffmassen gearbeitet, die zunächst pastös und modellierbar sind und anschließend durch Photopolymerisation in ihrer fertig-modellierten Form ausgehärtet werden.

Üblicherweise werden derartige Massen vom Hersteller in Dosen geliefert, aus denen sie mit einem Spatel oder Pinsel aufgetragen werden. Um eine vorzeitige Photopolymerisation zu verhindern, ist es dabei erforderlich, die Vorratsdosen unmittelbar nach jeder Entnahme wieder zu verschließen und dadurch die Massen gegen Lichteinfall zu schützen. Erfahrungsgemäß erfolgt dies aber insbesondere im Dentallabor bei der Bearbeitung größerer Zahnersatzteile in der Regel nicht, da es bedeutet, daß das Auftragswerkzeug immer wieder aus der Hand gelegt werden muß, und somit einen erhöhten Arbeitsaufwand darstellt.

Ferner wird im allgemeinen mit mehreren unterschiedlich gefärbten Massen gearbeitet, um den Farbton des natürlichen Gebisses möglichst genau zu treffen. Werden nun, wie es üblich ist, Teile der unterschiedlichen Massen nacheinander mit dem gleichen Auftragswerkzeug entnommen, so findet eine unerwünschte gegenseitige Verschleppung und Vermischung der unterschiedlich gefärbten Massen statt. Zusätzlich zu der oben erörterten, in der Praxis unvermeidbaren Oberflächenpolymerisation führt auch diese Farbverunreinigung dazu, daß die Massen vorzeitig unbrauchbar werden.

Der Erfindung liegt die Aufgabe zugrunde, eine aus wenigen und billigen Einzelteilen herstellbare und einfach zu handhabende Vorrichtung zu schaffen, mit der sich Dentalmassen, insbesondere photopolymerisierbare Massen, mit einer Hand und in genauer Dosierung ausbringen und unmittelbar auf die zu bearbeitende Stelle auftragen lassen.

Die erfindungsgemäße Lösung dieser Aufgabe ist im kennzeichnenden Teil des Patentanspruches 1 angegeben. Danach dient zur Aufnahme der Dentalmasse der zwischen einem Kolben und einer Ausbringöffnung liegende Teil eines Gehäuses, und der Kolben ist durch eine in eine drehbare Mutter eingreifende Gewindespindel verschiebbar. Die so gebildete Baugruppe ist in die Aufnahme einer Handhabe einsetzbar, die so ausgebildet ist, daß die Gewindespindel drehfest und axial verschiebbar, die Mutter dagegen drehbar und verschiebungsfest relativ zu der Handhabe gehalten ist.

Bei dieser erfindungsgemäßen Gestaltung liegt die Dentalmasse jeweils nur an der Austrittsöffnung des Gehäuses frei, die schon aus Gründen der feinen Dosierung und der gezielten Abgabe an kleinen Bearbeitungsflächen einen entsprechend kleinen Durchmesser aufweist. Eine Photopolymerisation kann daher allenfalls an der kleinen innerhalb der Ausbringöffnung freiliegenden Oberfläche auftreten. Außerdem wird in dünnen Schichten die Polymerisation durch die Anwesenheit des Luftsauerstoffs inhibiert, so daß die an der Ausbringöffnung befindliche Masse nicht nennenswert aushärtet und jedenfalls leicht verschieblich und ausbringbar bleibt.

Die erfindungsgemäße Gestaltung ermöglicht eine einfache einhändige Betätigung der Vorrichtung dadurch, daß die gesamte Vorrichtung lediglich an der Handhabe erfaßt zu werden braucht und eine Drehung ausschließlich der Mutter relativ zu der Handhabe erforderlich ist, wobei sich die relative Stellung von Handhabe und Mutter beim Betrieb nicht ändert.

Infolge der getrennten Ausführung der Handhabe und der von Gehäuse, Mutter und Gewindespindel gebildeten Baugruppe wird es möglich, nach Verbrauch der jeweiligen Masse diese aus nur wenigen einfachen Bauteilen bestehende Baugruppe als ganze wegzuwerfen und statt dessen eine neu befüllte Baugruppe in die Handhabe einzusetzen. Die getrennte Ausführung ist ferner deshalb von Vorteil, weil üblicherweise Dentalmassen in einer großen Anzahl (z.B. 50) verschiedenen Farbtönen bereitgehalten werden, aus denen der Zahnarzt oder Zahntechniker für eine Arbeit jeweils nur wenige (typisch 3) benötigt, so daß nur eine entsprechend geringe Anzahl von Handhaben zur Verfügung stehen muß, in die die jeweils benötigen Behälterbaugruppen eingesetzt werden.

Durch den Einsatz der erfindungsgemäßen Vorrichtung wird ferner eine Verschleppung und gegenseitige Verunreinigung mehrerer Massen vermieden, wie sie bei Verwendung der üblichen Dosen durch den Pinsel erfolgt.

Aus der deutschen Patentschrift Nr. 2 741 185 ist zwar eine Vorrichtung der eingangs bezeichneten Gattung bekannt, die jedoch für andere Arten von Dentalmassen, insbesondere Amalgam, bestimmt ist. Die bekannte Vorrichtung ist nicht nur infolge der Vielzahl von erforderlichen unterschiedlichen Bauelementen in ihre Herstellung wesentlich aufwendiger sondern auch in der Handhabung ziemlich ungünstig. Bei einhändiger Betätigung müssen dort nämlich sowohl eine direkt am hinteren Ende der Gewindespindel befestigte Handhabe als auch das Gehäuse selbst stationär gehalten werden und gleichzeitig eine zwischen der Handhabe und dem Gehäuse vorgesehene, am hinteren Gehäuseende gelagerte Mutter gedreht werden. Für die Drehbewegung steht daher praktisch nur der Daumen zur Verfügung, der nur unter Druck arbeiten kann und daher die Tendenz hat, die Vorrichtung seitlich zu verschieben, wobei sich die Ausbringöffnung möglicherweise vom Bearbeitungsort entfernt. Dabei ändert sich der Abstand zwischen der Hand und der Ausbringöffnung laufend, so daß der Benutzer während der Arbeit die Stellung der Ausbringöffnung beobachten muß und sich nicht vollständig auf die Arbeit konzentrieren kann.

Ferner ändert sich während des Ausbringens der Abstand zwischen der im Handballen liegenden Handhabe und dem zwischen Zeige- und Mittelfinger gehaltenen Gehäuse fortlaufend, woraus sich ergibt, daß der Gesamthub des Kolbens auf den Abstand zwischen denjenigen beiden extremen Handhaltungen begrenzt ist, in denen eine Führung und Betätigung der Vorrichtung praktisch noch einigermaßen leicht möglich ist. Gleichzeitig wird die erforderliche fortlaufende Änderung der Handstellung dazu führen, daß auf die Gewindespindel ein wesentlicher Druck ausgeübt wird, der bei dem ziemlich steilen Gewinde dazu führen kann, daß der Kolben auch ohne absichtliche Drehung der Mutter vorgedrückt wird.

In der Weiterbildung der Erfindung nach den Patentansprüchen 2 und 3 ergeben sich die Vorteile einer arbeitsphysiologisch besonders günstigen Formgebung bzw. Anpassung der Vorrichtung an die Hand des jeweiligen Benutzers.

Die Weiterbildungen der Erfindung nach den Patentansprüchen 4 bis 6 sind unter dem Gesichtspunkt der einfachen Auswechselbarkeit von Vorteil. Nach Anspruch 6 ist dabei die die Masse enthaltende Baugruppe einfach durch Einschnappen in die Handhabe einsetzbar.

In der Weiterbildung der Erfindung nach Anspruch 7 steht die gesamte axiale Länge des Gehäuses für das Aufbringen der Drehbewegung zur Verfügung, wobei eine besonders einfache, in Dreh- und Axialrichtung feste Verbindung zwischen Mutter und Gehäuse in Anspruch 8 angegeben ist.

Die im Anspruch 9 angegebene Maßnahme weist sich bei Betätigung der Vorrichtung mit der rechten Hand als besonders günstig.

Die Formgebung der Vorrichtung nach Anspruch 10 gewährleistet gute Sicht zum Bearbeitungsort. Gleichzeitig wird die bei abgelegter Vorrichtung möglicherweise dem Licht ausgesetzte Oberfläche der Masse minimal gehalten.

Die Ausgestaltung der Erfindung nach Anspruch 11 ist insbesondere bei Verwendung der Vorrichtung zum unmittelbaren Auftragen der Masse in situ von Vorteil. Eine geschlossenere Form der Vorrichtung wird in der Ausgestaltung der Erfindung nach Anspruch 12 erreicht, wobei die einfache Auswechselbarkeit der die Dentalmasse aufnehmenden Baugruppe voll erhalten bleibt. Aus hygienischen und ästhetischen Gesichtspunkten heraus ist dabei insbesondere die Formgebung nach Anspruch 21 günstig.

Die Maßnahmen der Ansprüche 13 und 14 gestatten eine weitere Zerlegbarkeit des wiederverwendbaren Teils der Vorrichtung, was die Reinigung und Lagerhaltung erleichtert.

Die Weiterbildungen der Erfindung nach den Ansprüchen 14 bis 16, 19 und 23 sorgen für eine gute axiale Führung der gegen Drehung gesicherten Gewindespindel, was umso wichtiger ist, je länger das die Dentalmasse aufnehmende Gehäuse und damit der Gesamthub der Spindel ist.

In der Weiterbildung der Erfindung nach den Ansprüchen 17 und 18 erfüllt die Gewindespindel die zusätzliche Funktion einer Füllstandsanzeige, so daß der Benützer die jeweils noch verfügbare Menge erkennen kann. Bei dieser Ausgestaltung ist die Maßnahme nach Anspruch 20 für das leichtere Einführen der Gewindespindel in die die Aufnahme bildende Hülse von Vorteil.

Bevorzugte Ausführungsbeispiele der Erfindung werden nachstehend anhand der Zeichnungen näher erläutert; in den Zeichnungen zeigen

Figur 1 eine perspektivische Darstellung einer ersten Ausführungsform der Vorrichtung,

Figur 2 einen Längsschnitt durch die aus Gehäuse, Mutter, Gewindespindel und Kolben bestehende Baugruppe der Vorrichtung nach Figur 1,

Figur 3 einen Längsschnitt durch eine zweite Ausführungsiorm der Vorrichtung, und

Figur 4 einen Querschnitt längs der Linie II-II in Figur 3.

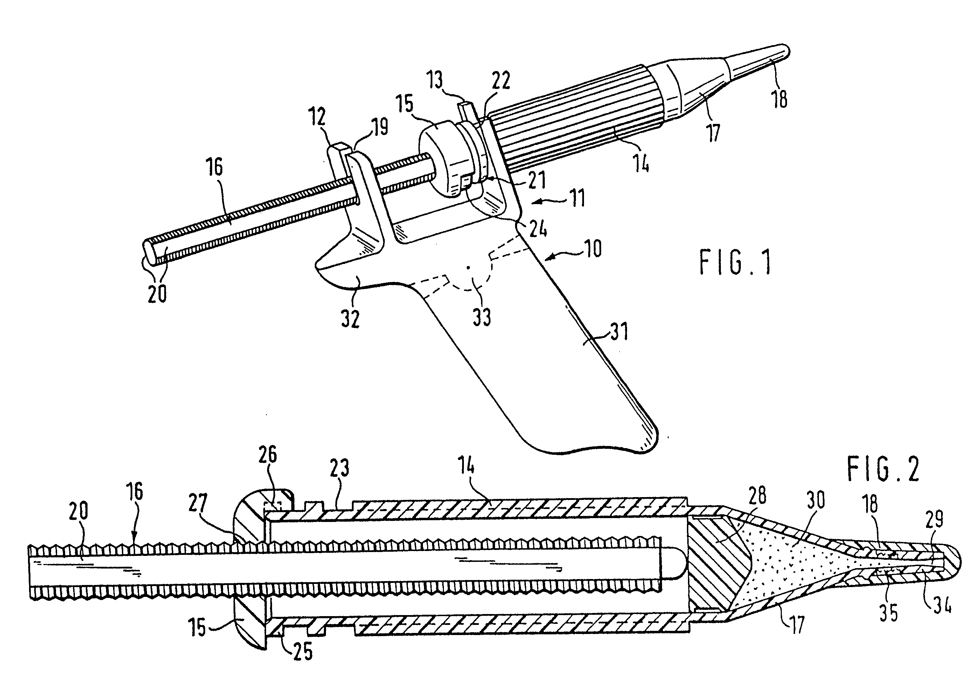

Die in Fig. 1 gezeigte Ausbringvorrichtung umfaßt eine Handhabe 10 mit einer generell U-förmigen Aufnahme 11, deren beiden Schenkel 12 und 13 gabelartig gestaltet sind. In die Aufnahme 11 ist eine von einem generell zylindrischen Gehäuse 14, einer Mutter 15 und einer Gewindespindel 16 gebildete Baugruppe eingesetzt. Die Spitze des Gehäuses 14 ist als trichterförmige Tülle 17 ausgebildet, deren Ausbringöffnung mit einer Kappe 18 verschließbar ist. Über den Hauptteil seiner Länge ist das Gehäuse 14 mit einer in Längsrichtung verlaufenden Riffelung versehen.

Der Schenkel 12 der Aufnahme 11 ist mit einem Schlitz 19 mit parallelen Seiten versehen, die an einander gegenüberliegenden Abflachungen 20 der Gewindespindel 16 derart angreifen, daß die Gewindespindel 16 in Axialrichtung frei verschiebbar, gegen Drehung jedoch gesichert ist.

Andererseits ist der Schenkel 13 der Aufnahme 11 mit einer kreisförmigen Öffnung 21 versehen, die über einen Durchbruch 22 nach außen offen ist. Die Öffnung 21 greift an einer im hinteren Teil der Gehäuseaußenwand ausgebildeten Ringnut 23 (vergleiche Fig. 2) an und lagert das Gehäuse 14 mit der Mutter 15 derart, daß diese Teile drehbar jedoch in Längsrichtung nicht verschiebbar sind. Die Mutter 15 weist eine seitliche Aussparung 24 auf und ist über einen am hinteren Gehäuseende vorgesehenen Flansch 25 (vergleiche Fig. 2) in seitlicher Richtung aufgeschoben und dadurch in Axialrichtung unverschiebbar an dem Gehäuse 14 befestigt. Ein in eine Aussparung des Flansches 25 eingreifender innerer Vorsprung 26 (vergleiche Fig. 2) bewirkt außerdem eine drehsichere Verbindung zwischen der Mutter 15 und dem Gehäuse 14. Ein seitliches Abrutschen der Mutter 15 vom Gehäuse 14 wird im zusammengebauten Zustand durch die Gewindespindel 16 verhindert, die eine zentrische Gewindebohrung 27 in der Stirnfläche der Mutter 15 durchsetzt.

Der Durchbruch 22 beläßt von der Öffnung 21 in dem Schenkel 13 einen über etwas mehr als 180° verlaufenden Bogenteil. Außerdem sind die beiden von der Öffnung 21 und dem Durchbruch 22 gebildeten Gabelarme des Schenkels 13 derart federnd, daß sie ein seitliches Einführen des Gehäuses 14 mit der Mutter 15 unter Einschnappen um die Ringnut 23 herum gestatten, somit eine selbsttätige Lösung des Gehäuses 14 von der Handhabe 10 verhindern. Bei diesem seitlichen Einsetzen gelangt die Gewindespindel 16 in dem Schlitz 19. Zum leichteren Einführen sind sowohl der Schlitz 19 als auch der Durchbruch 22 mit äußeren Schrägungen versehen.

Wie aus Fig. 2 ersichtlich, liegt die Gewindespindel 16 mit ihrem vorderen Ende an einem in dem Gehäuse 14 verschiebbaren Kolben 28 an. Zwischen dem Kolben 28 und der mit der Kappe 18 verdeckten Ausbringöffnung 29 befindet sich die auszubringende photopolymerisierbare Masse. In Fig. 2 ist der Kolben 28 in seiner völlig vorgeschobenen Stellung gezeigt. In dieser Stellung ist das Gehäuse so weit wie möglich entleert und kann nun weggeworfen werden, wobei in die in Fig. 1 gezeigte Handhabe ein neu befülltes Gehäuse eingesetzt werden kann. Grundsätzlich ist es möglich, die Mutter 15 und die Gewindespindel 16 aus dem entleerten Gehäuse zu entnehmen und wieder zu verwenden, da diese Teile zu keinem Zeitpunkt mit der Masse 30 in Berührung kommen. Da jedoch die Kappe 15 und die Gewindespindel 16 ebenso wie das Gehäuse 14, der Kolben 28 und die Kappe 18 aus billigen Kunststoffen herstellbar sind, dürfte es wirtschaftlicher sein, die gesamte in Fig. 2 gezeigte Baugruppe nach Ausbringen der verfügbaren Masse wegzuwerfen. Um den in der Tülle 17 verbleibenden Rest der Masse 30 möglichst gering zu halten, ist die Vorderfläche des Kolbens 28 konisch ausgebildet, wobei der Konuswinkel dadurch begrenzt ist, daß die Masse beim Vorschieben des Kolbens nicht hinter diesen gelangen soll.

Bei Verwendung der Vorrichtung für die beschriebenen photopolymerisierbaren Massen sind das Gehäuse 14, die Mutter 15 und die Kappe 18 aus lichtundurchlässigem Material gefertigt. Ferner ist der Minimaldurchmesser der Ausbringöffnung 29, der etwas hinter dem vorderen Ende der Tülle 17 liegt, möglichst klein gewählt. Typischerweise ist er kleiner als etwa 1,0 mm, vorzugsweise zwischen 0,3 und 0,8 mm. Eine möglichst enge Ausbringöffnung 29 ist nicht nur vom Standpunkt der Ausbringung möglichst fein dosierbarer Mengen vorteilhaft, sondern insbesondere auch im Hinblick auf die Erzielung einer möglichst kleinen, bei Entfernung der Kappe 18 freiliegende Oberfläche der Masse 30 von Vorteil, um eine vorzeitige Aushärtung der Masse zu verhindern.

Zum Gebrauch wird die in Fig. 1 gezeigte Vorrichtung derart in die rechte Hand genommen, daß der Griff 31 der Handhabe 10 am Handballen anliegt und z.B. von Mittel-, Ring- und kleinem Finger umschlossen wird. Dabei kommt der Ansatz 32 auf der Beuge zwischen Daumen und Zeigefinger zu liegen. Die Vorrichtung liegt somit sicher in der Hand, wobei mindestens Daumen und Zeigefinger frei bewegbar bleiben. Wird nun mit Daumen und Zeigefinger das Gehäuse 14 an seiner Riffelung gedreht, so bewegt sich die gegen Drehung gesicherte Gewindespindel 16 und schiebt dabei den Kolben 28 innerhalb des Gehäuses 14 nach vorne, so daß die Masse 30 an der Ausbringöffnung 29 austritt.

Da es bei der beschriebenen Handhaltung einfacher ist, das Gehäuse 14 durch eine Aufwärtsbewegung des Daumens und eine Abwärtsbewegung des oder der anderen Finger in Drehung zu versetzen, sind die Mutter 15 und die Gewindespindel 16 mit einem Linksgewinde versehen, um bei dieser Drehrichtung von Gehäuse 14 und Mutter 15 eine Vorwärtsbewegung der Spindel 16 zu erzeugen.

Wie in Fig. 1 gezeigt, verläuft der Griff 31 der Handhabe unter einem Winkel zu der von dem Gehäuse 14, der Mutter 15 und der Gewindespindel 16 definierten Axialrichtung. Ein für die Handhabung günstiger Winkel liegt beispielsweise bei etwa 70°. Um eine Anpassung an unterschiedliche Handgrößen und Handhaltungen zu ermöglichen, kann auch zwischen dem Griff 31 und der Aufnahme 11 ein Gelenk 33 vorgesehen sein, das in Fig. 1 mit gestrichelten Linien angedeutet ist.

Die Tülle 17 kann, wie oben angenommen, einteilig an das Gehäuse 14 angeformt sein. Wie in Fig. 2 getrichelt gezeigt, kann die Spitze 34 der Tülle 17 bei einer anderen Ausgestaltung an ihrem hinteren Ende mit einem Gewinde 35 versehen sein, das in ein entsprechendes Gegengewinde am vorderen Teil der Tülle 17 eingreift Eine derartige Auswechselbarkeit der Tüllenspitze 34 ist dann zweckmäßig, wenn die Vorrichtung in der zahnärztlichen Praxis zum Ausbringen der Masse direkt am Behandlungsort im Munde von Patienten verwendet wird.

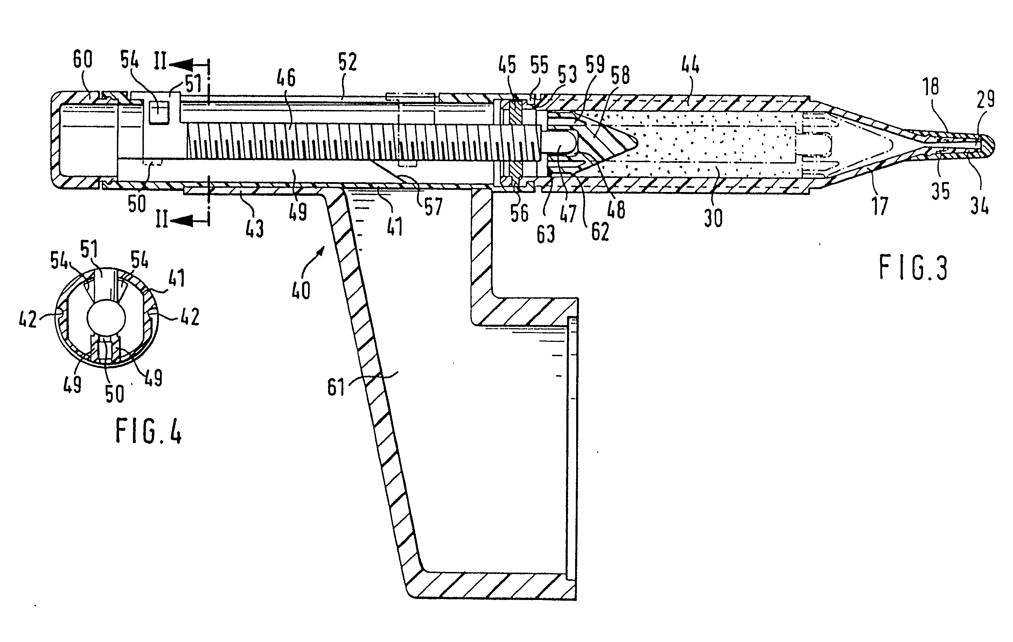

Bei der in Figur 3 gezeigten Ausbringvorrichtung besteht die generell mit 40 bezeichnete Handhabe aus zwei lösbar miteinander verbundenen Hauptbestandteilen, nämlich einer Hülse 41, die zur Aufnahme der die Dentalmasse 30 enthaltenden Baugruppe dient, und einem Griff 61. Wie aus Figur 4 ersichtlich, ist die Hülse 41 im wesentlichen kreiszylindrisch und weist an ihrer Außenseite zwei horizontal und etwa diametral einander gegenüberliegende Vertiefungen 42 auf, in die der Griff 61 mit zwei entsprechend geformten (nicht gezeigten) Noppen derart einschnappt, daß die Hülse 41 und der Griff 61 dreh- und verschiebungsfest miteinander verbindbar sind. Die Noppen sind an den äußeren Enden einer an der Oberseite des Griffs 61 vorgesehenen teilzylindrischen Schale 43 angeordnet, deren Innendurchmesser dem Außendurchmesser der Hülse 41 entspricht.

In der Ausführungsform nach Figur 3 ist die Mutter 45 in einem nach oben offenen Schlitz am hinteren Ende des Gehäuses 44 eingeschoben und durch einen unteren Vorsprung 56 gegen Verdrehung gegenüber dem Gehäuse 44 gesichert.

Die in die Mutter 45 eingreifende Gewindespindel 46 weist an ihrem vorderen Ende einen dünneren abgerundeten Ansatz 47 auf, der in eine Ausnehmung 48 an der Rückseite des Kolbens 58 einsteckbar ist. Die Aussparung 48 ist von einer ebenfalls nach hinten offenen ringförmigen Aussparung 59 umgeben, die den Dichtungsringen 62 und 63 Elastizität verleiht, so daß diese über den gesamten Vorschub des Kolbens 58 Dichtigkeit gewährleisten. Die Steckverbindung bewirkt, daß die Gewindespindel durch den Kolben in Axialrichtung zentrisch geführt ist, was insbesondere dann von Bedeutung ist, wenn sich der Kolben nahe dem vorderen Ende des Gehäuses 44 befindet.

An ihrem hinteren Ende weist die Gewindespindel 46 einen nach unten ragenden Vorsprung 50 auf, der in den Schlitz einer an der unteren Innenwand der Hülse 41 angeformten Führungsschiene 49 eingreift. Ein nach oben weisender Finger 51, der ebenfalls am hinteren Ende der Gewindespindel 46 vorgesehen ist, greift in einen die obere Wand der Hülse 41 unterbrechenden Axialschlitz 52 ein. Der in der Führungsschiene 49 laufende Vorsprung 50 und der in dem Längsschlitz 52 laufende Finger 51 führen die Gewindespindel 46 derart, daß diese relativ zu der Hülse 41 und damit auch zu dem Griff 61 gegen Drehung gesichert ist.

Die durch den Axialschlitz 52 hindurch sichtbare Außenfläche des Fingers 51 dient ferner als Füllstandsanzeige, wobei die Außenfläche der Hülse 41 nahe des Axialschlitzes 52 mit einer geeigneten Skala versehen sein kann.

An dem Finger 51 ist an beiden seitlichen Flächen jeweils eine Nase 54 angeformt, deren obere Flächen entsprechend der Innenwand der Hülse 41 gekrümmt sind und somit ein radiales Ausweichen der Gewindespindel 46 nach oben verhindern. Ein Ausweichen nach unten wird dadurch verhindert, daß die Gewindespindel 46 oder mindestens ihr hinterer, den Vorsprung 50 tragender Teil an der Oberkante der Führungsschiene 49 läuft. Diese Maßnahmen sorgen dafür, daß auch das hintere Ende der Gewindespindel - ebenso wie ihr vorderes Ende durch den Kolben 58 - stets in Axialrichtung zentrisch geführt ist. Daher können über den gesamten Hub der Gewindespindel 46 keine Verkantungen gegenüber der Mutter 45 auftreten, so daß die Vorrichtung in jeder Stellung leichtgängig ist.

Ein nach innen ragender Ringwulst 55 am vorderen Ende der Hülse 41 läßt sich in eine in der Nähe des hinteren Endes des Gehäuses 44 vorgesehene Ringnut 53 derart einrasten, daß das Gehäuse 44 relativ zu der Hülse 41 drehbar, in Axialrichtung jedoch verschiebungsfest ist.

Die Handhabung der Vorrichtung nach Fig. 3 und 4 im Gebrauch erfolgt genauso wie oben beschrieben. Wiederum sind wegen der für Rechtshänder einfacheren Betätigung die Mutter 45 und die Gewindespindel 46 mit einem Linksgewinde versehen, um bei dieser Drehrichtung von Gehäuse 44 und Mutter 45 eine Vorwärtsbewegung der Spindel 46 zu erzeugen.

Ist der Kolben 58 ganz vorgeschoben, so ist das Gehäuse 44 so weit wie möglich entleert und wird nun zusammen mit der Gewindespindel 46 und der Hülse 41 weggeworfen. Grundsätzlich ist es möglich, die Hülse 41, die Gewindespindel 46 und auch die Mutter 45 wieder zu verwenden, da diese Teile zu keinem Zeitpunkt mit der Dentalmasse 30 in Berührung kommen. Da diese Bauteile jedoch ebenso wie das Gehäuse 44, der Kolben 58 und die Kappe 18 aus billigen Kunststoffen herstellbar sind, dürfte es wirtschaftlicher sein, die gesamte, von dem Griff 61 lösbare Baugruppe nach Ausbringen der verfügbaren Dentalmasse wegzuwerfen.

Der Zusammenbau der aus dem Gehäuse 44, dem Kolben 58, der Mutter 45, der Gewindespindel 46 und der Hülse 41 bestehenden Baugruppe erfolgt in der Regel beim Hersteller der Dentalmasse 30. Dabei wird in das mit der Masse 30 gefüllte und mit dem Kolben 58 abgeschlossene Gehäuse 44 zunächst die Mutter 45 eingeschoben. Sodann wird die Gewindespindel 46 durch die Mutter 45 eingedreht, bis der Ansatz 47 in die Ausnehmung 48 des Kolbens 58 eingreift. Sodann wird das vorderen Ende der Hülse 41 auf das hintere Ende des Gehäuses 44 aufgeschoben, bis der Ringwulst 55 in die Ringnut 53 einrastet. Um ein leichtes Einführen der Gewindespindel 46 in die Hülse 41 derart zu gestatten, daß der am hinteren Spindelende vorgesehene Finger 51 in den Axialschlitz 52 eintritt, endet die Führungsschiene 49 in Abstand vom vorderen Hülsenende und beginnt mit einer nach innen ansteigenden Abschrägung 57. In der zusammengebauten Stellung erscheint der Finger 51 in der in Figur 1 in ausgezogenen Linien gezeigten Stellung am hintersten Ende des Axialschlitzes 52.

In das hintere Ende der Hülse 41 ist eine Markierungskappe 60 eingesteckt, die durch ihre Farbgebung oder sonstige Markierung die in dem Gehäuse 44 enthaltene Dentalmasse kennzeichnet.

Das vordere Ende des Gehäuses 44 ist genauso gestaltet wie das des Gehäuses 14 nach Figur 1 und 2, so daß sich eine erneute Beschreibung erübrigt.

Die im vorstehenden beschriebenen Ausbringvorrichtungen sind insbesondere für Dentalmassen bestimmt. Die gleichen Vorrichtungen können auch zum dosierten Ausbringen anderer Massen verwendet werden.

**Patentansprüche**

1. Vorrichtung zum dosierten Ausbringen von Dentalmassen, mit

(a) einem Gehäuse (14; 44) mit einer Ausbringöffnung (29), (b) einem in dem Gehäuse (14; 44) verschiebbaren Kolben (28; 58), wobei der zwischen dem Kolben und der Ausbringöffnung (29) liegende Raum zur Aufnahme der Dentalmasse (30) dient,

(c) einer den Kolben (28; 58) beaufschlagenden, relativ zum Gehäuse (14; 44) axial verschiebbaren Gewindespindel (16; 46),

(d) einer Handhabe (10; 40) zur drehfesten Halterung der Gewindespindel (16; 46), und

(e) einer mit dem Gehäuse (14; 44) verbundenen Mutter (15; 45), die zum Vorschub der Gewindespindel (16; 46) relativ zu dieser drehbar ist,

dadurch gekennzeichnet, daß die Handhabe (10; 40) als getrenntes Bauteil mit einer Aufnahme (11; 41) ausgebildet ist, in die die von dem Gehäuse (14; 44) mit der Mutter (15; 45) und der Gewindespindel (16; 46) gebildete Baugruppe derart einsetzbar ist, daß gegenüber der Handhabe (10; 40) die Gewindespindel (16; 46) axial verschiebbar und die Mutter (15; 45) gegen Verschiebung gesichert ist.

2. Vorrichtung nach Anspruch 1, dadurch gekennzeichnet, daß die Handhabe (10;40) einen Griff (31;61) aufweist, der zur Axialrichtung der von dem Gehäuse (14;44), der Mutter (15;45) und der Gewindespindel (16;46) gebildeten Baugruppe geneigt ist.

3. Vorrichtung nach Anspruch 1 oder 2, dadurch gekennzeichnet, daß die Handhabe (10) ein Gelenk (33) zur Änderung des Winkels zwischen der Aufnahme (11) und dem Griff (31) aufweist.

4. Vorrichtung nach einem der Ansprüche 1 bis 3, dadurch gekennzeichnet, daß die Aufnahme (11) im wesentlichen U-förmig mit zwei Schenkeln (12, 13) ausgebildet ist, von denen der eine (12) eine erste Öffnung (19) zur axialen Führung der seitlich abgeflachten Gewindespindel (16) und der andere (13) eine zweite Öffnung (21) zur drehbaren Lagerung der Mutter (15) aufweist.

5. Vorrichtung nach Anspruch 4, dadurch gekennzeichnet, daß die Gewindespindel (16) zwei parallele seitliche Abflachungen (20) aufweist und die erste Öffnung als Schlitz (19) mit parallelen Seiten ausgebildet ist, und daß die zweite Öffnung (21) im wesentlichen kreisförmig ist und einen zu dem Schlitz (19) parallelen Durchbruch (22) nach außen aufweist.

6. Vorrichtung nach Anspruch 5, dadurch gekennzeichnet, daß der Durchbruch (22) von der zweiten Öffnung (21) einen Teilkreis von mehr als 180° beläßt und die die zweite Öffnung und den Durchbruch bildenden Gabelarme des genannten anderen Schenkels (13) federnd sind.

7. Vorrichtung nach einem der Ansprüche 1 bis 6, dadurch gekennzeichnet, daß die Mutter (15;45) mit dem Gehäuse (14;44) in Axial- und Drehrichtung fest verbunden ist und die Halterung der Mutter relativ zu der Aufnahme (11;41) durch unmittelbaren Eingriff des Gehäuses (14;44) in die Aufnahme (11;41) erfolgt.

8. Vorrichtung nach Anspruch 7, dadurch gekennzeichnet, daß die Mutter (15.45) durch Verschiebung quer zu der Axialrichtung am Gehäuse (14.44) befestigbar ist

9. Vorrichtung nach einem der Ansprüche 1 bis 8, dadurch gekennzeichnet, daß die Mutter (15.45) und die Gewindespindel (16;46) mit einem Linksgewinde versehen sind.

10. Vorrichtung nach einem der Ansprüche 1 bis 9, dadurch gekennzeichnet, daß das Gehäuse (14) eine die Ausbringöffnung (29) bildende trichterartige Tülle (17) aufweist, deren minimaler Innendurchmesser im Bereich der Ausbringöffnung kleiner als etwa 1,0 mm ist und vorzugsweise zwischen 0,3 bis 0,8 mm liegt.

11. Vorrichtung nach Anspruch 10, dadurch gekennzeichnet, daß der vordere Teil der Tülle (17) auswechselbar ist.

12. Vorrichtung nach einem der Ansprüche 1 bis 3 und 7 bis 11, dadurch gekennzeichnet, daß die Aufnahme als eine die Gewindespindel (46) umgebende Hülse (41) ausgebildet ist, deren vorderes Ende für drehbaren Eingriff mit dem die Mutter (45) dreh- und verschiebungsfest haltenden Gehäuse (44) gestaltet ist, und die eine Einrichtung (49...52) zur axialen Führung der Gewindespindel (46) aufweist.

13. Vorrichtung nach Anspruch 12, dadurch gekennzeichnet, daß die Handhabe (40) einen mit der Hülse (41) lösbar verbundenen Griff (61) aufweist.

14. Vorrichtung nach Anspruch 13, dadurch gekennzeichnet, daß der Griff (61) eine die Hülse (41) teilweise umgreifende Schale (43) aufweist, in die die Hülse (41) dreh- und verschiebungsfest einschnappt.

15. Vorrichtung nach einem der Ansprüche 12 bis 14, dadurch gekennzeichnet, daß die Führungseinrichtung eine an der Innenwand der Hülse (41) vorgesehene axial verlaufende Führungsschiene (49) aufweist, die mit einem Vorsprung (50) oder einer Nut der Gewindespindel (46) zusammenarbeitet.

16. Vorrichtung nach Anspruch 15, dadurch gekennzeichnet, daß die Gewindespindel (46) an einer der Führungsschiene (49) gegenüberliegenden Stelle gegen radiales Ausweichen geführt ist.

17. Vorrichtung nach einem der Ansprüche 12 bis 16, dadurch gekennzeichnet, daß die Gewindespindel (46) in Verbindung mit der Hülse (41) eine Füllstandsanzeige (51, 52) für die in dem Gehäuse (44) vorhandene Dentalmasse bildet.

18. Vorrichtung nach Anspruch 17, dadurch gekennzeichnet, daß die Füllstandsanzeige einen am hinteren Ende der Gewindespindel (46) angeordneten Finger (51) umfaßt, der durch einen in der Hülse (41) vorgesehenen Axialschlitz (52) sichtbar ist.

19. Vorrichtung nach Anspruch 18, dadurch gekennzeichnet, daß der Axialschlitz (52) und der Finger (51) die Gewindespindel (46) in Axialrichtung führen.

20. Vorrichtung nach Anspruch 15, dadurch gekennzeichnet, daß die Führungsschiene (49) in Abstand hinter dem vorderen Ende der Hülse (41) mit einer von außen nach innen ansteigenden Abschrägung (57) beginnt.

21. Vorrichtung nach einem der Ansprüche 12 bis 20, dadurch gekennzeichnet, daß das Gehäuse (44) und die Hülse (41) im wesentlichen kreiszylindrisch sind und gleichen Außendurchmesser haben.

22. Vorrichtung nach einem der Ansprüche 1 bis 21, dadurch gekennzeichnet, daß das vordere Ende (47) der Gewindespindel (46) mit dem Kolben (58) durch Steckeingriff koppelbar ist.

**Claims:**

1. Device for dispensing dental compositions in doses, comprising
(a) a casing (14;44) having a dispensing opening (29), (b) a plunger (28; 58) displaceable within the casing (14; 44), the space between the plunger and the dispensing opening (29) serving to accomodate the dental composition (30),
(c) a threaded spindle (16; 56) acting on the plunger (28; 58) and being axially movable relative to the casing (14; 44),
(d) a manipulating member (10; 40) for non-rotatably supporting the threaded spindle (16; 46), and
(e) a nut (15;45) connected to the casing (14; 44) and being rotatable relative to the threaded spindle (16; 46) for advancing the same,
characterised in that the manipulating member (10; 40) is formed as a separate part including receiving means (11; 41) into which the structural group formed by the casing (14; 44) with the nut (15; 45) and the threaded spindle (16; 46) can be inserted in such a manner that the threaded spindle (16; 46) is axially displaceable relative to the manipulating member (10; 40) and the nut (15; 45) is secured against displacement relative to the manipulating member.

2. The device of claim 1, characterised in that the manipulating member (10; 40) includes a handle (31; 61) which is inclined with respect to the axial direction of the structural group formed by the casing (14; 44)' the nut (15; 45) and the threaded spindle (16; 46).

3. The device of claim 1 or 2, characterised in that the manipulating member (10) includes a joint (33) for varying the angle between the receiving means (11) and the handle (31).

4. The device of any of claims 1 to 3, characterised in that the receiving means (11) is substantially U-shaped with two legs (12, 13) of which one (12) includes a first opening (19) for axially guiding the laterally flattened threaded spindle (16) and the other (13) includes a second opening (21) for rotatably supporting the nut (15).

5. The device of claim 4, characterised in that the threaded spindle (16) has two parallel lateral flattenings (20) and the first opening is formed as a slot (19) having parallel sides, and that the second opening (21) is substantial circular and has an outwardly open cut-out (22) parallel to the slot (19).

6. The device of claim 5, characterised in that the cut-out (22) leaves a partial circle of more than 180° of the second opening (21) and that the fork arms of the said other leg (13), which form the second opening and the cut-out, are resilient.

7. The device of any of claims 1 to 6, characterised in that the nut (15; 45) is fixedly connected to the casing (14; 44) with respect to the axial and rotational directions and that the nut is supported relative to the receiving means (11; 41) by direct engagement of the casing (14; 44) in the receiving means (11; 41). 8. The device of claim 7, characterised in that the nut (15; 45) is adapted to be fixed to the casing (14; 44) by displacement transverse of the axial direction.

9. The device of any of claims 1 to 8, characterised in that the nut (15; 45) and the threaded spindle (16; 46) are provided with lefthand threads.

10. The device of any of claims 1 to 9, characterised in that the casing (14) includes a funnel-like nozzle (17) defining the dispensing opening (29), the minimum inner diameter of the nozzle in the area of the dispensing opening being smaller than about 1.0 mm and preferably between 0.3 and 0.8 mm.

11. The device of claim 10, characterised in that the front portion of the nozzle (17) is exchangeable.

12. The device of any of claims 1 to 3 and 7 to 11, characterised in that the receiving means is formed as a sleeve (41) surrounding the threaded spindle (46) the front end of the sleeve being formed for rotatably engaging the casing (44) which retains the nut (45) against rotation and displacement, the sleeve including means (49; 52) for axially guiding the threaded spindle (46).

13. The device of claim 12, characterised in that the manipulating member (40) includes a handle (61) detachably connected to the sleeve (41).

14. The device of claim 13, characterised in that the handle includes a shell (43) partly surrounding the sleeve (41), the sleeve (41) snap-engaging the shell in a manner so as to be fixed against rotation and displacement.

15. The device of any of claims 12 to 14, characterised in that guiding means includes an axially extending guide rail (49) provided on the inner wall of the sleeve (41) and cooperating with a projection (50) or a groove of the threaded spindle (46).

16. The device of claim 15, characterised in that the threaded spindle (46) is guided at a location opposite to the guide rail (49) so as to prevent radial yielding.

17. The device of any of claims 12 to 16, characterised in that the threaded spindle (46) cooperates with the sleeve (41) to form a filling level indicator (51, 52) for the dental composition contained in the casing (44).

18. The device of claim 17, characterised in that the filling level indicator comprises a finger (51) disposed at the rear end of the threaded spindle (46) and being visible through an axial slot (52) provided in the sleeve (41).

19. The device of claim 18, characterised in that the axial slot (52) and the finger (51) guide the threaded spindle (46) along the axial direction.

20. The device of claim 15, characterised in that the guide rail (59) starts at a distance behind the front end of the sleeve (41) with an inwardly rising chamfer (57).

21. The device of any of claims 12 to 20, characterised in that the casing (44) and the sleeve (41) substantially are circular-cylindrical and have the same outer diamter.

22. The device of any of claims 1 to 21, characterised in that the front end (47) of the threaded spindle (46) is adapted to be coupled to the plunger (58) by plug-in engagement.

**Revendications**

1. Dispositif pour distribuer de façon dosée des masses dentaires, comprenant

(a) un réceptacle (14; 44) comportant une ouverture de distribution (29),

(b) un piston (28; 58) pouvant se déplacer dans le réceptacle (14; 44), l'espace situé entre le piston et l'ouverture de distribution (29) servant à contenir la masse dentaire (30),

(c) une broche filetée (16; 46) agissant sur le piston (28; 58) et pouvant se déplacer axialement par rapport au réceptacle (14; 44),

(d) une poignée (10; 40) pour maintenir la tige filetée (16; 46) en l'empêchant de tourner, et

(e) un écrou (15; 45) relié au réceptacle (14; 44), qui peut tourner en vue de faire avancer la broche filetée (16; 46) par rapport à ce dernier,

caractérisé en ce que la poignée (10; 40) est constituée sous forme d'une pièce séparée et comprend un logement (11; 41) dans lequel on peut insérer l'ensemble constitué par le réceptacle (14; 44), l'écrou (15; 45) et la broche filetée (16; 46) de manière que la broche filetée (16; 46) puisse être deplacée axialement par rapport à la poignée (10; 40) et que l'écrou (15; 45) ne puisse être déplacé.

2. Dispositif selon la revendication 1, caractérisé en ce que la poignée (10; 40) comprend une partie de saisie (31; 61) qui est inclinée vers la direction axiale de l'ensemble constitué par le réceptacle (14; 44), l'écrou (15; 45) et la broche filetée (16; 46).

3. Dispositif selon la revendication 1 ou 2, caractérisé en ce que la poignée (10) comprend une articulation (33) pour modifier l'angle entre le logement (11) et la partie de saisie (31).

4. Dispositif selon l'une quelconque des revendications 1 à 3, caractérisé en ce que le logement (11) est constitué sensiblement en forme de U avec les deux branches (12, 13), dont l'une (12) comprend une première ouverture (19) pour le guidage axial de la broche filetée (16) qui présente des à-plats latéraux et l'autre (13) une seconde ouverture (21) pour le montage à rotation de l'ecrou (15).

5. Dispositif selon la revendication 4, caractérisé en ce que la broche filetée (16) comprend deux à-plats (20) latéraux et parallèles et la première ouverture est constituée sous forme d'une fente (19) à côtés parallèles, et en ce que la seconde ouverture (21) est de forme sensiblement circulaire et présente un passage (22) en direction de l'extérieur, parallèle à la fente (19).

6. Dispositif selon la revendication 5, caractérisé en ce que le passage (22) laisse subsister dans la seconde ouverture (21) un arc partiel de plus de 180° et en ce que les bras en forme de fourche de l'autre branche mentionnée (13) qui forment la seconde ouverture et le passage sont élastiques.

7. Dispositif selon l'une quelconque des revendications 1 à 6, caractérisé en ce que l'écrou (15; 45) est solidaire du réceptacle (14; 44) en direction axiale et en rotation et en ce que la fixation de l'écrou par rapport au logement (11; 41) est réalisée par pénétration directe du réceptacle (14; 44) dans le logement (11; 41).

8. Dispositif selon la revendication 7, caractérisé en ce que l'écrou (15; 45) peut être fixé au réceptacle (14; 44) par glissement transversalement à la direction axiale.

9. Dispositif selon l'une quelconque des revendications 1 à 8, caractérisé en ce que l'écrou (15; 45) et la broche filetée (16; 46) sont munis d'un filetage à gauche.

10. Dispositif selon l'une quelconque des revendications 1 à 9, caractérisé en ce que le réceptacle (14) comprend un embout (17) en forme d'entonnoir constituant l'ouverture de distribution (29) dont le diamètre minimal interne est inférieur, dans la région de l'ouverture de distribution, à environ 1,0 mm et est de préférence compris entre 0,3 et 0,8 mm.

11. Dispositif selon la revendication 10, caractérisé en ce que la partie avant de l'embout (17) est interchangeable.

12. Dispositif selon l'une quelconque des revendications 1 à 3 et 7 à 11, caractérisé en ce que le logement est constitué sous forme d'une douille (41) entourant la broche filetée (46), dont l'extrémité avant est conformée pour coopérer en rotation avec le réceptacle (14) qui retient l'écrou (45) fixe en rotation et en déplacement, et qui presente un dispositif (49...52) pour le guidage axial de la broche filetée (46).

13. Dispositif selon la revendication 12, caractérisé en ce que la poignée (40) comprend une partie de saisie (61) reliée de façon amovible à la douille (41).

14. Dispositif selon la revendication 13, caractérisé en ce que la partie de saisie (61) comprend une coquille (43) entourant partiellement la douille (41), dans laquelle s'enclenche la douille (41) en étant empêchée de

**0 090 961**

tourner et de se déplacer.

15. Dispositif selon l'une quelconque des revendications 12 à 14, caractérisé en ce que le dispositif de guidage comprend un rail de guidage (49) orienté axialement et prévu dans la paroi interne de la douille (41), qui coopère avec une saillie (50) ou une rainure de la broche filetée (46).

16. Dispositif selon la revendication 15, caractérisé en ce que la broche filetée (46) est guidée de manière à ne pouvoir s'écarter radialement sur une partie opposée du rail de guidage (49).

17. Dispositif selon l'une quelconque des revendications 12 à 16, caractérisé en ce que la broche filetée (46) forme en liaison avec la douille (41) un dispositif indicateur du niveau de remplissage (51, 52) de la masse dentaire contenue dans le réceptacle (44).

18. Dispositif selon la revendication 17, caractérisé en ce que le dispositif indicateur de niveau de remplissage comprend un doigt (51) disposé à l'extrémité arrière de la broche filetée (46), qui est visible par une fente axiale (52) prévue dans la douille (41).

19. Dispositif selon la revendication 18, caractérisé en ce que la fente axiale (52) et le doigt (51) guident la broche filetée (46) dans le sens axial.

20. Dispositif selon la revendication 15, caractérisé en ce que le rail de guidage (49) commence à une certaine distance à l'arrière de l'extrémité avant de la douille (41) par une partie biseautée (57) allant en montant de l'extérieur vers l'intérieur.

21. Dispositif selon l'une quelconque des revendications 12 à 20, caractérisé en ce que le réceptacle (44) et la douille (41) sont sensiblement de forme cylindrique et circulaire et ont le même diamètre externe. 22. Dispositif selon l'une quelconque des revendications 1 à 21, caractérisé en ce que l'extrémité avant (47) de la broche filetée (46) peut être accouplée au piston (58) par enclenchement.

FIG.1

FIG.2

FIG.3

FIG.4

0 090 961